# EUROPÄISCHE PATENTANMELDUNG

(11) **EP 1 748 566 A2**
(43) Veröffentlichungstag der Anmeldung: **31.01.2007**
(21) Anmeldenummer: 06117592.3
(22) Anmeldetag: 20.07.2006
(51) Int. Cl.: H04B 1/16, H04B 7/08

(54) **Funkempfangsgerät und Verfahren zur Justierung von Funkempfangsgeräten**

(30) Priorität: 27.07.2005 DE 102005035087
(71) Anmelder: ROBERT BOSCH GMBH, 70442 Stuttgart (DE)
(72) Erfinder: Kottschlag, Gerhard, 31139, Hildesheim (DE); Ritschen, Andreas, 21385, Amelinghausen (DE); Pochowski, Lutz, 31141, Hildesheim (DE); Passoke, Jens, 30966, Hemmingen (DE)

(57) **Zusammenfassung**

Bei einem Funkempfangsgerät (1) mit mindestens zwei Tunern (2a, 2b), die unabhängig voneinander mit Oszillatorfrequenzen (f_{VCO1}, f_{VCO2}) auf jeweilige Empfangsfrequenzen einstellbar sind und jeweils mindestens einen Mischer (5a, 5b) für ein Hochfrequenz-Empfangssignal (HF₁, HF₂), einen mit dem Mischer (5a, 5b) verbundenen Oszillator (6a, 6b) zur Erzeugung einer Oszillatorfrequenz (f_{VCO1}, f_{VCO2}) und ein Zwischenfrequenzfilter (7a, 7b) am Ausgang des Mischers (5a, 5b) haben, sind die Oszillatoren (6a, 6b) so eingestellt sind, dass bei Empfang des gleichen Nutzsignals durch die mindestens zwei Tuner (2a, 2b) deren Oszillatorfrequenzen (f_{VCO1}, f_{VCO2}) voneinander verschieden sind.

## Beschreibung

Die Erfindung betrifft ein Funkempfangsgerät mit mindestens zwei Tunern, die unabhängig voneinander mit zwei Oszillatorfrequenzen auf jeweilige Sendefrequenzen einstellbar sind. Jeder Tuner verfügt jeweils mindestens über einen Mischer für ein Hochfrequenzempfangssignal, einen mit dem Mischer verbundenen Oszillator zur Erzeugung der Oszillatorfrequenz und ein Zwischenfrequenzfilter bzw. eine Zwischenfrequenzfilterkette am Ausgang des Mischers.

Die Erfindung betrifft weiterhin ein Verfahren zur Justierung eines solchen Funkempfangsgerätes.

Derartige Funkempfangsgeräte mit mindestens zwei Tunern, auch Doppeltuner-Empfänger genannt, sind insbesondere von mobilen Funkempfangssystemen, beispielsweise aus EP 199 058 B1, bekannt, sie dienen zur Steigerung der Empfangsqualität beim Empfangen eines Funksignals durch beide Tuner im gleichen Empfangsband. Wenn jeder dieser Tuner mit einer separaten Antenne verbunden wird, kann durch Überlagerung beider Empfangssignale eine deutliche Verbesserung des Empfangs realisiert werden.

Durch Verschiebung der Phasenlage und der Amplitude der Empfangssignale bei den Tunern in geeigneter Weise gegeneinander kann bei einer anschließenden Addition der verschiedenen Empfangssignale zu einem Summensignal die bestmögliche Signalqualität erzielt werden. In einem fahrenden Kraftfahrzeug ist so eine schnelle Anpassung auf unterschiedliche Empfangssituationen möglich, die sich durch Signalreflektionen und Mehrwegeempfang ergeben. Viele Störeffekte, die bei konventionellen Funkempfängern mit einer Antenne auftreten, können durch dieses Verfahren bei einer schnellen Adaption fast vollständig beseitigt werden.

Weiterhin ist bekannt, dass die Zwischenfrequenz-Durchlasskurve der Zwischenfrequenzfilter der Tuner, die auch als Kettenschaltungen mehrerer Zwischenfrequenzfilter realisiert werden können, zum einen von der üblichen Toleranz der Filterbauteile als auch von einem dauerhaften Veränderungsprozess nach dem Lötvorgang abhängig ist. Die Mittenfrequenz eines jeden einzelnen Zwischenfrequenzfilters oder von Kettenschaltungen mehrerer Zwischenfrequenzfilter ist damit unterschiedlich und nicht unbedingt mit der im Empfänger benutzten Zwischenfrequenz identisch. Bei der Produktion von Funkempfangsgeräten ist es daher bekannt, nach dem Lötvorgang die jeweilige Filtermittenfrequenz zu bestimmen und darauf hin durch geringfügige Veränderung der Oszillatorfrequenz des lokalen Oszillators des Tuners eine veränderte Zwischenfrequenz einzustellen, so dass optimale symmetrische Selektionseigenschaften erzielt werden. Die Veränderung der Zwischenfrequenz erfolgt im Allgemeinen nicht beliebig, sondern in Rasterschritten, die von der Schleifenfrequenz eines phasengekoppelten Oszillators (PLL-VCO) und dem verfügbaren Teilern der PLL-Oszillatorschaltung abhängig sind.

Bei der Verwendung von mindestens zwei Tunern kann es nachteilig zu Verkopplungen der Oszillatorsignale kommen, wodurch Störungen im Audiosignal entstehen. Sind beide Tuner auf dieselbe Empfangsfrequenz abgestimmt, so ist bei identischer Auslegung beider Tuner sowohl die Oszillatorfrequenz, als auch die durch Mischung erzeugte Zwischenfrequenz identisch. In diesem Fall kommt es bei einer Verkopplung der Oszillatorsignale zu Auslöschungen, Schwebungen und Pfeifen im Audiosignal.

Aufgabe der Erfmdung ist es daher, ein verbessertes Funkempfangsgerät zu schaffen, mit dem die oben genannten Nachteile beseitigt werden.

Die Aufgabe wird mit dem gattungsgemäßen Funkempfangsgerät erfindungsgemäß dadurch gelöst, dass die Oszillatoren so eingestellt sind, dass eine jeweilige Oszillatorfrequenz zur Umsetzung des Hochfrequenzsignals für eine ausgewählte Empfangsfrequenz auf ein Zwischenfrequenz-Empfangssignal mit einer Differenzfrequenz korrigiert wird und die Differenzfrequenz in Bezug auf die Oszillatorfrequenz des mindestens einen anderen Tuners so gewählt ist, dass bei Einstellung auf dieselbe Empfangsfrequenz die Oszillatorfrequenzen voneinander verschieden sind.

Durch die Vorgabe einer im Hinblick auf die Oszillatorfrequenzen des mindestens einen anderen Tuners ausgewählten Differenzfrequenz wird erreicht, dass die Oszillatorfrequenzen und damit auch die Zwischenfrequenzen voneinander unterschiedlich sind und damit die Gefahr der Verkopplung der Oszillatoren reduziert wird. Erfolgt dennoch eine negative Beeinflussung beider Oszillatoren gegeneinander, so entsteht hierbei ein Störsignal außerhalb des Hörbereiches und tritt deshalb nicht oder weniger störend in Erscheinung.

Eine solche Einstellung und Vorgabe einer Differenzfrequenz ist bei herkömmlichen Oszillatoren einfach zu realisieren.

Unter Zwischenfrequenzfilter wird vorliegend ein einziges Filter oder eine Kettenschaltung mehrerer Filter, beispielsweise keramischer Filter, verstanden.

Das Funkempfangsgerät hat den Vorteil, dass ein vereinfachter Aufbau ermöglicht wird, da nur eine erheblich geringere Entkoppelung der Oszillatorsignale erfolgen muss, beispielsweise durch räumlich voneinander getrennten Aufbau der mindestens zwei Tuner oder durch Schirmung, was andernfalls erhöhte Kosten und einen geringeren Integrationsgrad zur Folge hätte. Im Unterschied zur Entkopplung der Oszillatorsignale durch Nutzung eines einzigen gemeinsamen Oszillators für die mindestens zwei Tuner zur Störminimierung hat das erfindungsgemäße Funkempfangsgerät den Vorteil, dass die Tuner auch zeitweise unterschiedliche Empfangsfrequenzen empfangen können, beispielsweise zur Aktualisierung von RDS-Daten durch zeitweise Nutzung eines Tuners als Hintergrundtuner.

Die Differenzfrequenzen werden mindestens so groß gewählt, dass sich eine Verringerung der störenden Oszillatorverkopplung ergibt oder bei gleich bleibendem Störverhalten der Aufwand für Entkopplungsmaßnahmen verringert werden kann.

Die Differenzfrequenzen sind vorzugsweise so gewählt, dass der Frequenzversatz der Oszillatorfrequenzen bei Einstellung der Tuner auf dieselbe Sendefrequenz größer als der hörbare Frequenzbereich ist. Dieser Frequenzversatz sollte mindestens ± 10 kHz und besonders bevorzugt mindestens ± 15 kHz betragen, um oberhalb der hörbaren Frequenz zu liegen.

Der Frequenzversatz darf aber maximal nur so groß gewählt werden, dass die Zwischenfrequenz-Empfangssignale innerhalb der Bandbreite der jeweiligen Zwischenfrequenzfilter liegen.

Besonders vorteilhaft ist es, wenn die Differenzfrequenzen weiterhin so gewählt sind, dass bei einem Frequenzversatz der Oszillatorfrequenzen die Zwischenfrequenzen der Tuner auf die jeweilige Mittenfrequenz der Zwischenfrequenzfilter bestmöglich abgestimmt sind. Dabei wird neben der Einstellung der Oszillatorfrequenzen durch die in Bezug auf die anderen Tuner gewählten Differenzfrequenz noch eine Abstimmung der Oszillatorfrequenzen auf die Mittenfrequenz des jeweiligen Zwischenfrequenzfilters, das auch als Kettenschaltung mehrerer Zwischenfrequenzfilter ausgeführt sein kann, erreicht. Die Differenzfrequenz wird dann im Hinblick auf die jeweilige Mittenfrequenz so eingestellt, dass sowohl eine möglichst symmetrische Zwischenfrequenzselektion für den jeweiligen Tuner möglich ist, als auch ein Frequenzversatz zur Reduzierung oder Eliminierung von Verkopplungen durch die Oszillatorsignale und Zwischenfrequenz-Empfangssignale erreicht wird. Die Differenzfrequenz wird damit nicht nur bezogen auf den jeweiligen Tuner, sondern bezogen auf das gesamte System gewählt.

Eine solche Justierung der Funkempfangsgeräte erfolgt vorzugsweise bei der Fertigung durch das Verfahren mit den Schritten:
a) Bestimmen der jeweils optimalen Mittenfrequenz der Zwischenfrequenzfilter;
b) Einstellen der Differenzfrequenzen für die Oszillatoren der mindestens zwei Tuner derart, dass die Zwischenfrequenzen bestmöglich an die jeweilige optimale Mittenfrequenz angepasst sind und bei Einstellung der Tuner auf dieselbe Empfangsfrequenz die Oszillatorfrequenzen voneinander verschieden sind.

Die Erfindung wird nachfolgend anhand der beigefügten Zeichnungen beispielhaft näher erläutert. Es zeigen:
Figur 1 - Blockdiagramm eines Funkempfangsgerätes mit zwei Tunern;
Figur 2 - Diagramm der Spannungsamplituden der Oszillatorsignale und Zwischenfrequenzsignale in Abhängigkeit von der Frequenz bei Verkopplung aufgrund gleicher Oszillatorfrequenzen;
Figur 3 - Diagramm der Spannungsamplituden der Oszillator- und Zwischenfrequenzsignale in Abhängigkeit von der Frequenz bei Frequenzversatz der Oszillatorfrequenzen;
Figur 4 - Diagramm der Filtercharakteristiken der Zwischenfrequenzfilter von zwei Tunern in Abhängigkeit von der Frequenz mit einem Versatz der Mittenfrequenzen.

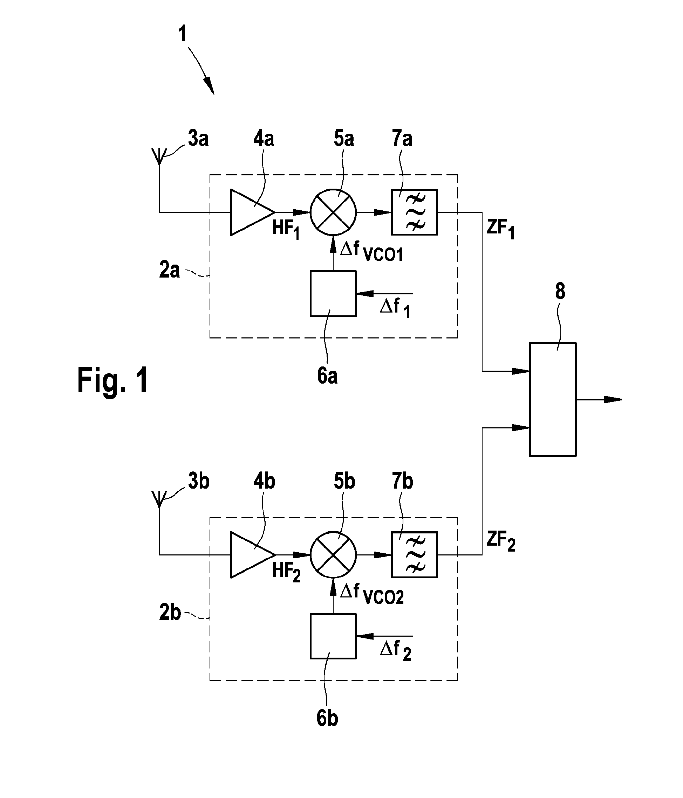

Die Figur 1 lässt ein Blockdiagramm eines Funkempfangsgerätes 1 erkennen, dass einen ersten Tuner 2a, und einen zweiten Tuner 2b hat. Optional können auch drei, vier, fünf oder mehr Tuner vorgesehen sein.

Die Tuner 2a, 2b sind jeweils an eine eigene Empfangsantenne 3a, 3b geschaltet und haben eine Eingangsstufe, beispielsweise einen Vorverstärker 4a, 4b für das Hochfrequenz-Empfangssignal. Optional oder alternativ können hier auch Filterelemente, eine nicht dargestellte automatische Verstärkungssteuerung (AGC) und/oder andere Funktionen, wie z.B. ein geregelter ZF-Verstärker vorgesehen sein. An den Ausgang der Vorverstärker 4a, 4b für das Hochfrequenz-Empfangssignal HF₁, HF₂ ist jeweils ein Mischer 5a, 5b geschaltet, der mit einem Oszillatorsignal VCO₁, VCO₂ eines Oszillators 6a, 6b beaufschlagt wird, um das Hochfrequenz-Empfangssignal HF für eine ausgewählte Empfangsfrequenz auf eine Zwischenfrequenz herabzumischen. Dabei können die Oszillatoren derart ausgeführt sein, dass sie bei höheren und vorzugsweise unterschiedlichen Frequenzen schwingen und dass das in den jeweiligen Mischer eingespeiste abgeleitete Oszillatorsignal durch herunterteilen des entsprechenden Oszillatorsignals entsteht. Weiterhin ist vorteilhaft, wenn die Abstimmbereiche oder vorzugsweise die gesamten genutzten Oszillatorbereiche nicht überlappen. Diese erweiterten Bereiche umfassen über den Abstimmbereich hinaus auch die Bereiche, die beim Einschwingen der Oszillatoren gegebenenfalls überstrichen werden. In diesen Ausführungsvarianten werden vorzugsweise unterschiedliche geeignete Teilungsverhältnisse in den Tunern 2a, 2b verwendet. An den Ausgang des Mischers 5a, 5b ist jeweils ein Zwischenfrequenzfilter 7a, 7b geschaltet, um das Zwischenfrequenz-Empfangssignal ZF₁, ZF₂ mit einer von dem jeweiligen Zwischenfrequenzfilter 7a, 7b vorgegebenen Frequenzbandbreite herauszuselektieren. Durch Auswahl der Oszillatorfrequenz VCO₁, VCO₂ wird die Empfangsfrequenz vorgegeben, die am Ausgang des Zwischenfrequenzfilters 7a, 7b umgesetzt als Zwischenfrequenzsignal ZF₁, ZF₂ bereitsteht.

Die Zwischenfrequenz-Empfangssignale ZF₁, ZF₂ können anschließend in einer Signalverarbeitungseinheit 8 des Funkempfangsgerätes in bekannter Weise weiterverarbeitet werden. Dabei kann beispielsweise die Frequenz, die Phasenlage und/oder die Amplitude der Zwischenfrequenz-Empfangssignale ZF₁, ZF₂ in geeigneter Weise gegeneinander verschoben werden, so dass bei einer anschließenden Addition der verschiedenen Zwischenfrequenz-Empfangssignale ZF₁, ZF₂ zu einem Summensignal eine bestmögliche Signalqualität eines Empfangssignals erzielt wird, wenn die beiden Tuner 2a, 2b auf dieselbe Empfangsfrequenz eingestellt sind.

Bei diesem Funkempfangsgerät 1 wird für jeden Tuner 2a, 2b eine Differenzfrequenz Δf₁, Δf₂ festgelegt, die auf die zum Herabmischen des Hochfrequenz-Empfangssignals HF₁, HF₂ auf eine definierte Zwischenfrequenz ursprünglich vorgesehene Oszillatorfrequenz f_{VCO} addiert oder davon subtrahiert wird. Die Differenzfrequenzen Δf₁, Δf₂ sind fest vorgegeben und so gewählt, dass der Frequenzversatz der Oszillatorfrequenzen f_{VCO1}, f_{VCO2} bei Einstellung der beiden Tuner 2a, 2b auf dieselbe Empfangsfrequenz größer als der hörbare Frequenzbereich ist. Auf der anderen Seite sollte der Frequenzversatz nur so groß gewählt werden, dass sich die jeweiligen Zwischenfrequenz-Empfangssignale ZF₁, ZF₂ noch innerhalb der Bandbreite der Zwischenfrequenzfilter 7a, 7b befinden und keine Signalbeeinträchtigung erfahren. Den Differenzfrequenzen Δf₁, Δf₂ ist damit auch eine obere Grenze gesetzt.

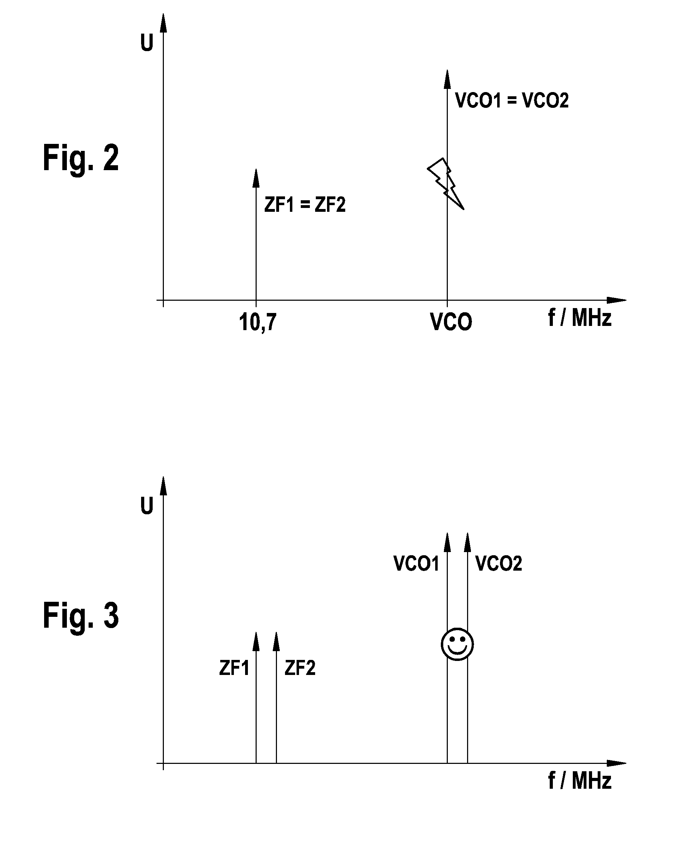

Die Figur 2 lässt ein Diagramm der Spannungsamplituden U der Oszillatorfrequenzsignale f_{VCO1}, f_{VCO2} und Zwischenfrequenz-Empfangssignale ZF₁, ZF₂ über einen Frequenzbereich in MHz erkennen, bei denen die Oszillatorfrequenzen f_{VCO1}, f_{VCO2} identisch sind. Hierdurch kann es zu einer Verkopplung der Oszillatorfrequenzsignale f_{VCO1}, f_{VCO2} kommen, die zu Störungen führen. Für Rundfunkempfänger liegt die Zwischenfrequenz ZF für den UKW-Empfang üblicherweise bei 10,7 MHz, optional sind auch andere Werte für die Zwischenfrequenz möglich. Die Oszillatorfrequenz f_{VCO} berechnet sich dann aus der Summe oder der Differenz der Zwischenfrequenz ZF und der zu empfangenden Empfangsfrequenz.

Die Figur 3 lässt ein Diagramm der Spannungsamplituden der Oszillatorfrequenzsignale f_{VCO1}, f_{VCO2} und Zwischenfrequenz-Empfangssignale ZF₁, ZF₂ über die Frequenz in MHz erkennen. Den Oszillatoren 6a, 6b der beiden Tuner 2a, 2b ist hierbei eine jeweilige Differenzfrequenz Δf₁, Δf₂ vorgegeben, wobei die Differenzfrequenzen Δf₁, Δf₂ wie oben erläutert so gewählt werden, dass die Oszillatorfrequenzen f_{VCO1}, f_{VCO2} unterschiedlich sind. Aufgrund dieses Frequenzversatzes kommt es zu keiner sich störend auswirkenden Verkopplung der Oszillatorfrequenzsignale f_{VCO1}, f_{VCO2}. Durch die Verwendung geringfügig unterschiedlicher Oszillatorfrequenzen f_{VCO1}, f_{VCO2} und daraus folgender ZF-Frequenzen ZF₁, ZF₂ können die durch Verkopplung entstehenden Störungen im Audiosignal minimiert bzw. vermieden werden. Zudem kann der Aufwand für eine Entkopplung der Oszillatoren 6a, 6b der Tuner 2a, 2b sowie eine Schirmung derselben minimiert wird.

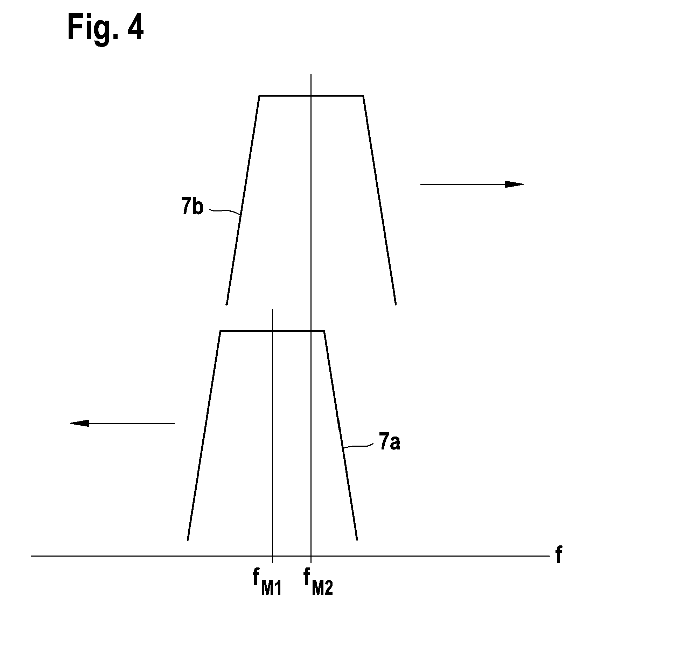

Die Figur 4 lässt die Filtercharakteristiken der Zwischenfrequenzfilter 7a, 7b des ersten und zweiten Tuners 2a, 2b über die Frequenz f erkennen. Es wird deutlich, dass sich die Mittenfrequenzen f_{M1}, f_{M2} des ersten Zwischenfrequenzfilters 7a und zweiten Zwischenfrequenzfilters 7b voneinander unterscheiden. Ein solcher Versatz der optimalen Mittenfrequenz f_{M} tritt insbesondere bei keramischen Zwischenfrequenzfiltern oder Kettenschaltungen von keramischen Zwischenfrequenzfiltern nach dem Lötvorgang der Zwischenfrequenzfilter 7a, 7b auf. Bei der Fertigung des Funkempfangsgerätes 1 wird daher vorzugsweise zunächst die jeweilige Mittenfrequenz f_{M1}, f_{M2} der Zwischenfrequenzfilter 7a, 7b nach dem Lötvorgang bestimmt, die eine optimale Zwischenfrequenzselektion erlaubt. Anschließend wird die Differenzfrequenz Δf₁, Δf₂ für den jeweiligen Tuner 2a, 2b in Richtung der jeweiligen Verstimmung der Mittenfrequenz f_{M1}, f_{M2} des Zwischenfrequenzfilters 7a, 7b so gewählt, dass einerseits bezogen auf den jeweiligen Tuner 2a, 2b eine möglichst symmetrische Zwischenfrequenzselektion erfolgt und andererseits in Bezug auf den zweiten Tuner 2a, 2b (bzw. die mehreren anderen Tuner im Empfangsgerät) ein geeigneter Frequenzversatz der Oszillatorfrequenzen f_{VCO1}, f_{VCO2} zur Vermeidung von Signalverkopplungen erreicht wird.

Sofern die Signalpfade beider Tuner 2a, 2b den gleichen Selektionsversatz der optimalen Mittenfrequenz f_{M1}, f_{M2} aufweisen, erfolgt die Auswahl der Differenzfrequenzen Δf₁, Δf₂ zur Verstimmung für beide Signalpfade gegenläufig mit gleichem Versatz, so dass sich zwischen beiden Oszillatorfrequenzen f_{VCO1}, f_{VCO2} ein Frequenzunterschied oberhalb der Audiobandbreite ergibt und bezogen auf den jeweiligen Tuner 2a, 2b eine möglichst geringe Abweichung von der optimalen Mittenfrequenz f_{M1}, f_{M2} des jeweiligen Zwischenfrequenzfilters 7a, 7b festgelegt wird.

### Beispielrechnung für die Ermittlung der Zwischenfrequenzen der beiden Tuner:

In einem Empfangsgerät gemäß Figur 1 werden die Oszillatoren 6a, 6b jeweils durch eine Phasenentkopplungsschleife PLL gesteuert, die eine Einstellung der Oszillatorfrequenz mit einer Schrittweite von 12,5 kHz ermöglicht. Somit kann die Zwischenfrequenz ZF₁, ZF₂, auf die ein Empfangssignal HF₁, HF₂ vom Mischer 5a, 5b umgesetzt wird, in Schritten von 12,5 kHz verstellt werden.

Zur Vermeidung von hörbaren störenden Verkopplungen der Oszillatoren 6a, 6b sollen diese mindestens einen Frequenzunterschied von ± 12,5 kHz, also insgesamt 25 kHz aufweisen.

Nach dem Lötvorgang werden folgende Mittenfrequenzen für die Zwischenfrequenzfilter 7a, 7b aus Figur 4 ermittelt: f_{M1} = 10,7100 MHz, f_{M2} = 10,7200 MHz. Diese beiden Werte führen zu einem Mittelwert von f_{MG} = 10,7150 MHz, er stellt die optimale ZF-Frequenz in einem Empfangsgerät nach dem Stand der Technik mit zwei Tunern und identischer Oszillatorfrequenz dar, da er der beste Kompromiss für den Betrieb beider Tuner ist.

Im erfindungsgemäßen Empfangsgerät werden die beiden ZF-Frequenzen der beiden Tuner folgendermaßen ermittelt: Da f_{M1} < f_{M2} ist, ergibt sich die Zuordnung der Differenzfrequenzen von Δf₁ = - 12,5 kHz und Δf₂ = + 12,5 kHz, aus Addition von Mittelwert (f_{MG} = 10,7150 MHz) und diesen Differenzfrequenzen erfolgt die Berechnung der optimalen ZF-Frequenzen: f_{O1} = 10,7025 MHz, f_{O2} = 10,7275 MHz.

Nun erfolgt noch eine Rundung auf die nächstmöglichen Frequenzen, die von der jeweiligen PLL eingestellt werden können: f_{R1} = 10,7000 MHz, f_{R2} = 10,7250 MHz.

## Patentansprüche

1. Funkempfangsgerät (1) mit mindestens zwei Tunern (2a, 2b), die unabhängig voneinander mit Oszillatorfrequenzen (f_{VCO1}, f_{VCO2}) auf jeweilige Empfangsfrequenzen einstellbar sind und jeweils mindestens einen Mischer (5a, 5b) für ein Hochfrequenz-Empfangssignal (HF₁, HF₂), einen mit dem Mischer (5a, 5b) verbundenen Oszillator (6a, 6b) zur Erzeugung einer Oszillatorfrequenz (f_{VCO1}, f_{VCO2}) und ein Zwischenfrequenzfilter (7a, 7b) am Ausgang des Mischers (5a, 5b) haben, **dadurch gekennzeichnet, dass** bei Empfang des gleichen Nutzsignals durch die mindestens zwei Tuner (2a, 2b) deren Oszillatorfrequenzen (f_{VCO1}, f_{VCO2}) voneinander verschieden sind.

2. Funkempfangsgerät (1) nach Anspruch 1, **dadurch gekennzeichnet, dass** in den mindestens zwei Tunern (2a, 2b) Zwischenfrequenzfilter (7a, 7b) verwendet werden, deren Mittenfrequenzen sich vor dem Einbau in die Tuner (2a, 2b) nur durch Bauteiltoleranzen voneinander unterscheiden.

3. Funkempfangsgerät (1) nach Anspruch 1 oder 2, **dadurch gekennzeichnet, dass** die Oszillatoren (6a, 6b) so eingestellt sind, dass eine jeweilige Oszillatorfrequenz (f_{VCO1}, f_{VCO2}) zur Umsetzung des Hochfrequenz-Empfangssignals (HF₁, HF₂) für eine ausgewählte Empfangsfrequenz auf ein Zwischenfrequenz-Empfangssignal (ZF₁, ZF₂) mit einer Differenzfrequenz (Δf₁, Δf₂) korrigiert wird und die Differenzfrequenz (Δf₁, Δf₂) in Bezug auf die Oszillatorfrequenzen (f_{VCO1}, f_{VCO2}) des mindestens einen anderen Tuners (2a, 2b) so gewählt ist, dass bei Einstellung auf dieselbe Empfangsfrequenz die Oszillatorfrequenzen (f_{VCO1}, f_{VCO2}) voneinander verschieden sind.

4. Funkempfangsgerät nach einem der vorhergehenden Ansprüche derart, dass die Oszillatoren (6a, 6b) bei unterschiedlichen Frequenzen oberhalb der in die Mischer (5a, 5b) eingespeisten Oszillatorsignale schwingen und die in die Mischer (5a, 5b) eingespeisten abgeleiteten Oszillatorsignale durch Herunterteilen der Oszillatorsignale erzeugt werden.

5. Funkempfangsgerät (1) nach einem der vorhergehenden Ansprüche, **dadurch gekennzeichnet, dass** bei Einstellung der Tuner (2a, 2b) auf dieselbe Empfangsfrequenz der Frequenzversatz der Oszillatorfrequenzen (f_{VCO1}, f_{VCO2}) größer als der hörbare Frequenzbereich ist.

6. Funkempfangsgerät (1) nach einem der vorhergehenden Ansprüche, **dadurch gekennzeichnet, dass** bei Einstellung der Tuner (2a, 2b) auf dieselbe Empfangsfrequenz der Frequenzversatz der Oszillatorfrequenzen (f_{VCO1}, f_{VCO2}) mindestens ± 10 kHz beträgt.

7. Funkempfangsgerät (1) nach einem der vorhergehenden Ansprüche, **dadurch gekennzeichnet, dass** der Frequenzversatz maximal so groß ist, dass die auf die Zwischenfrequenz gemischten Empfangssignale (ZF₁, ZF₂) innerhalb der Bandbreite der jeweiligen Zwischenfrequenzfilter (7a, 7b) liegen.

8. Funkempfangsgerät (1) nach einem der vorhergehenden Ansprüche, **dadurch gekennzeichnet, dass** die Oszillatorfrequenzen (f_{VCO1}, f_{VCO2}) weiterhin so gewählt sind, dass die Zwischenfrequenzen der Tuner (2a, 2b) auf die jeweilige Mittenfrequenz (f_{M1}, f_{M2}) der Zwischenfrequenzfilter (7a, 7b) bestmöglich abgestimmt sind.

9. Funkempfangsgerät nach einem oder mehreren der vorhergehenden Ansprüche, bei dem der Versatz der Mischeransteuerfrequenzen derart gewählt wird, dass dieser größer als die größte Audiofrequenz ist.

10. Verfahren zur Justierung von Funkempfangsgeräten (1) nach einem der vorhergehenden Ansprüche mit den Schritten:
a) Bestimmen der jeweils optimalen Mittenfrequenz (f_{M1}, f_{M2}) der Zwischenfrequenzfilter (7a, 7b);
b) Einstellen der Differenzfrequenzen (Δf₁, Δf₂) für die Oszillatoren (6a, 6b) der mindestens zwei Tuner (2a, 2b) derart, dass die Zwischenfrequenzen bestmöglich an die jeweilige optimale Mittenfrequenz (f_{M1}, f_{M2}) angepasst sind und bei Einstellung der Tuner (2a, 2b) auf dieselbe Empfangsfrequenz die Oszillatorfrequenzen (f_{VCO1}, f_{VCO2}) voneinander verschieden sind.

11. Verfahren nach Anspruch 10, **dadurch gekennzeichnet, dass** die Frequenzen der in den mindestens zwei Tunern (2a, 2b) verwendeten Zwischenfrequenzen in der gleichen Reihenfolge sortiert sind, wie die Mittenfrequenzen der in den jeweiligen Tunern (2a, 2b) eingebauten Zwischenfrequenzfiltern (7a, 7b).

12. Verfahren nach Anspruch 10 oder 11, **dadurch gekennzeichnet, dass** aus den Mittenfrequenzen (f_{M1}, f_{M2}) der Zwischenfrequenzfilter (7a, 7b) eine mittlere Mittenfrequenz ermittelt wird und die in den mindestens zwei Tunern (2a, 2b) verwendeten Zwischenfrequenzen entsprechend der mittleren Mittenfrequenz verschoben und auf die jeweils nächstgelegenen Frequenzen eingestellt werden, die mit der, Phasenkoppelschleife (PLL) der Oszillatoren (6a, 6b) einstellbar sind.
